Europäisches Patentamt

European Patent Office

Office européen des brevets

(19)

(11) Veröffentlichungsnummer : **0 007 077**
**B1**

# (12) EUROPÄISCHE PATENTSCHRIFT

(45) Veröffentlichungstag der Patentschrift :
02.12.81

(21) Anmeldenummer : 79102307.0

(22) Anmeldetag : 06.07.79

(51) Int. Cl.³ : **B 23 B 29/08**

(54) **Schnellwechsel-Stahlhalter, insbesondere für Langdrehautomaten oder ähnliche Maschinen.**

(30) Priorität : **17.07.78 DE 2831380**

(43) Veröffentlichungstag der Anmeldung :
**23.01.80 (Patentblatt 80/02)**

(45) Bekanntmachung des Hinweises auf die Patenterteilung : **02.12.81 Patentblatt 81/48**

(84) Benannte Vertragsstaaten :
**AT BE CH FR GB IT NL SE**

(56) Entgegenhaltungen :
**AT - B - 213 193**
**DE - U - 1 834 308**
**DE - U - 1 963 234**
**DE - U - 7 821 384**
**FR - A - 852 279**
**FR - A - 883 151**
**FR - A - 1 025 799**
**US - A - 3 157 078**
**US - A - 3 280 673**

(73) Patentinhaber : **Stuber, Erwin**
**Silcherstrasse 26**
**D-7141 Erdmannhausen (DE)**

(72) Erfinder : **Stuber, Erwin**
**Silcherstrasse 26**
**D-7141 Erdmannhausen (DE)**

(74) Vertreter : **Vogel, Georg**
**Auenweg 14**
**D-7141 Schwieberdingen (DE)**

Schnellwechsel-Stahlhalter, insbesondere für langdrehautomaten oder ähnliche Maschinen

Die Erfindung betrifft einen Schnellwechsel-Stahlhalter, insbesondere für Langdrehautomaten oder ähnliche Maschinen, nach dem Oberbegriff des Anspruches 1 oder 2. Als Stahlhalter kommen dabei vorzugsweise Drehmeißel-Halter zum Einsatz.

Die bekannten Schnellwechsel-Stahlhalter dieser Art haben, wie die US-A 3 280 673 zeigt, einen sehr komplizierten Aufbau und benötigen einen großen Platzbedarf, so daß sie gerade bei Langdrehautomaten ofer ähnlichen Maschinen mit mehreren, eng benachbarten bearbeitungsstationen nicht eingesetzt werden können.

Es ist Aufgabe der Erfindung, einen Schnellwechsel-Stahlhalter der eingangs erwähnten Art zu schaffen, der einfach im Aufbau ist und wenig Platz beansprucht.

Diese Aufgabe wird nach der Erfindung durch die im kennzeichnenden Teil des Anspruches 1 oder 2 aufgeführten Merkmale gelöst. Der Schnellwechsel-Stahlhalter in dieser Art benötigt nur einen einfachen kleinen Träger und ein ebenso einfaches Spannelement und kann daher sehr platzsparend aufgebaut werden.

Bei dieser Ausgestaltung und Anordnung des Spannelementes kann darüberhinaus die Verspannung zwischen dem Drehmeißel-Halter und dem Träger gelöst werden, ohne daß der Träger von der Spannfläche der Maschine gelöst werden muß. Außerdem wird durch den großen Stellweg des Spannelementes erreicht, daß verschiedene Größen von Drehmeißel-Haltern mit verschieden großen Schwalbenschwanznuten auf ein und dem selben Träger befestigt und verspannt werden können. Der Träger kann daher auch bei Werkzeugwechsel mit der Spannfläche der Maschine verbunden bleiben. Dies bringt erhebliche Reduzierung der Rüstzeiten.

Der Platzbedarf für den erfindungsgemäßen Schnellwechsel-Stahlhalter wird nach einer Ausgestaltung besonders klein, wenn der Schwalbenschwanzsteg selbst den Träger bildet.

Damit der Drehmeißel-Halter auch bei der Anordnung des Spannelementes in dem Drehmeißel-Halter entlang der Schwalbenschwanzverbindung am Träger verstellt werden kann, sieht eine Ausgestaltung vor, daß die Spannausnehmung des Schwalbenschwanzsteges eine senkrecht zur Arretierschraubenlängsachse stehende Abschlußwand aufweist.

Für die Anordnung und Ausbildung des Spannelementes in dem Träger hat sich eine Ausgestaltung als vorteilhaft erwiesen, die dadurch gekennzeichnet ist, daß ein zylindrischer Spannkeil in einer im Durchmesser abgesetzten Bohrung als Aussparung mittels einer Stellschraube verstellbar ist, die mittels eines Gewindeteiles in eine Gewindebohrung des Spannkeiles einschraubbar ist und sich mittels eines Bundes am Absatz der Bohrung abstützt.

Bei dieser Ausgestaltung wird die Verspannung zwischen dem Träger und dem Drehmeißel-Halter über die vom Spannelement übertragene Druckkraft erreicht.

Eine Ausgestaltung, bei der die Verspannung zwischen dem Träger und dem Drehmeißel-Halter über die vom Spannelement übertragene Zugkraft bewirkt wird, ist dadurch gekennzeichnet, daß der Spannkeil als Schlitten ausgebildet ist, der selbst in eine Stellschraube oder dgl. ausläuft und mittels einer Stellmutter axial verstellbar ist.

Die Erfindung wird anhand von verschiedenen, in den Zeichnungen dargestellten Ausführungsbeispielen näher erläutert. Es zeigt :

Fig. 1 einen Schnellwechsel-Stahlhalter, bei dem das Spannelement als Arretierschraube im Drehmeißel-Halter quer zur Schwalbenschwanzverbindung verstellbar und an der Schwalbenschwanzleiste verspannbar ist,

Fig. 2 einen Schnellwechsel-Stahlhalter, bei dem der Drehmeißel-Halter eine Aussparung zur Aufnahme eines zweiteiligen axial verstellbaren Spannelementes aufweist,

Fig. 3 das im Schnellwechsel-Stahlhalter nach Fig. 2 einsetzbare zweiteilige Spannelement und

Fig. 4 ein Spannelement mit angeformtem Spannkeil.

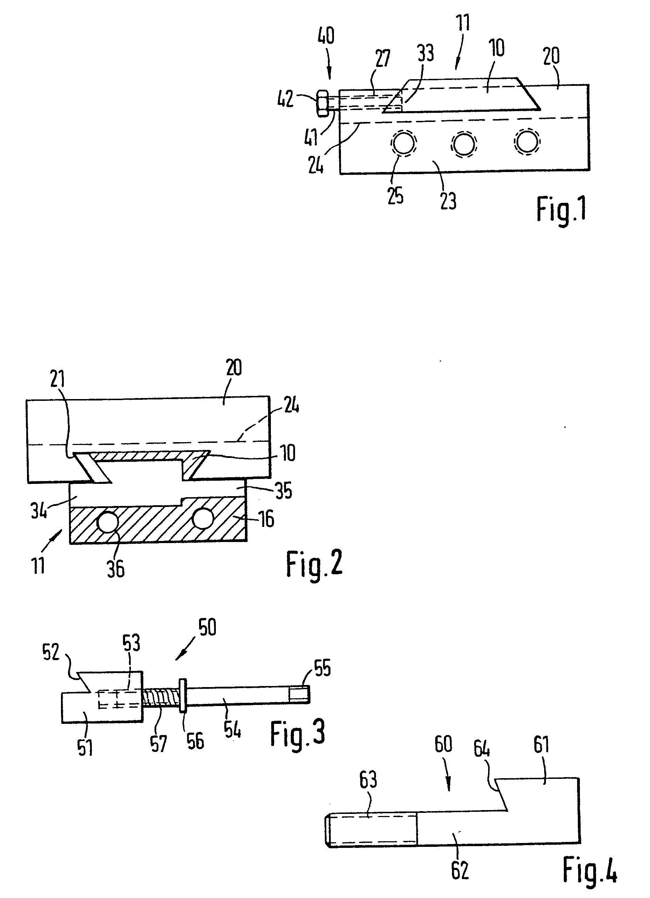

Bei dem Ausführungsbeispiel nach Fig. 1 und 2 wird ein handelsüblicher Drehmeißel-Halter 20 verwendet. Der Drehmeißel-Halter 20 ist im Querschnitt U-förmig und seine beiden Seitenschenkel 22 und 23 bilden eine nutartige Aufnahme 24 für den Drehmeißel, der mittels Feststellschrauben in dieser Aufnahme 24 gehalten ist. Die Feststellschrauben werden in die Gewindelöcher 25 im Seitenschenkel 23 eingeschraubt. Auf der Außenseite des Steges — der Abschlußfläche — ist in den Drehmeißel-Halter 20 eine Schwalbenschwanznut 21 eingelassen, die quer zur Aufnahme 24 für den Drehmeißel gerichtet ist.

Bei dem Ausführungsbeispiel nach Fig. 1 ist das Spannelement 40 als Arretierschraube ausgebildet, die mit ihrem Gewindeteil 41 in einer Gewindebohrung 27 des Drehmeißel-Halters 20 verstellbar ist. Diese Arretierschraube ist mit ihrer Längsachse senkrecht zur Längsachse des Schwalbenschwanzsteges 10 gerichtet, der hier selbst den Träger 11 bildet. Außerdem verläuft die Längsachse der Arretierschraube parallel zur Spannfläche des Schwalbenschwanzsteges 10. Die Seitenfläche des Schwalbenschwanzsteges 10 weist im Abstützbereich der Arretierschraube eine Spannausnehmung 33 auf, die eine senkrecht zur Arretierschraube stehende Abschlußwand aufweist. Die Spannausnehmung 33 hat in axialer Richtung der Schwalbenschwanzverbindung eine Abmessung, die den vorgegebenen Verstellweg des Drehmeißel-Halters 20 an dem Schwalbenschwanzsteg 10 berücksichtigt. Das Bedienungsende der Arretierschraube ist beim gezeigten Ausführungsbeispiel als Sechskant-Schraubenkopf ausgebildet und kann mit einem Schraubenschlüssel entsprechender Größe verstellt werden.

Das Spannelement kann jedoch auch anders gestaltet sein. Bei dem Schnellwechsel-Stahlhalter nach Fig. 2 ist in dem Befestigungsblock 16 des Trägers 11 eine als Bohrung mit den verschieden großen Abschnitten 34 und 35 ausgebildete Aussparung eingebracht. Der im Durchmesser größere Abschnitt 34 umfaßt dabei noch einen Teil des Schwalbenschwanzsteges 10, während der Abschnitt 35 zur Abschlußfläche des Befestigungsblockes 16 hin offen ist. Der Absatz zwischen den beiden Abschnitten 34 und 35 der Aussparung ist mit ihrer längsachse quer zur Längsachse der Schwalbenschwanzverbindung, sowie parallel zur Spannfläche des Befestigungsblockes 16 gerichtet. Der Befestigungsblock 16 hat Befestigungsbohrungen 36, die im Ausführungsbeispiel daher parallel zur Schwalbenschwanzverbindung verlaufen.

In die Ausparung wird das zweiteilige Spannelement 50 nach Fig. 3 eingesetzt. Dieses Spannelement 50 umfaßt einen zylindrischen Spannkeil 51 mit einem Spannteil 52, das einen Teil der Seitenfläche des Schwalbenschwanzsteges 10 bildet. In eine Gewindebohrung 53 des Spannkeils 51 ist das Gewindeteil 57 einer Stellschraube 54 eingeschraubt. Diese Stellschraube 54 stützt sich mit dem Bund 56 an dem Absatz der Abschnitte 34 und 35 der Aussparung in dem Schwalbenschwanzsteg 10 ab und ragt mit dem als Außensechskant 55 ausgebildeten Bedienungsende aus dem Abschnitt 35 der Aussparung. Durch Verdrehen der Stellschraube 54 kann der Spannkeil 51 ion den Abschnitt 34 der Aussparung eingezogen und aus diesem Abschnitt 34 herausgefahren werden. Dabei kann sich das Spannteil 52 des Spannkeiles 51 an der zugekehrten Seitenfläche der Schwalbenschwanznut 21 verspannen. Dabei wird vorzugsweise die Stellschraube 54 durch Linksdrehung in die Gewindebohrung 53 des Spannkeiles 51 hineingeschraubt. Die Verspannung zwischen dem Spannkeil 51 und der Schwalbenschwanznut 21 erfolgt in diesem Falle mittels Druck.

Dieselbe Druckverspannung kann jedoch auch so ausgelegt werden, daß die Aussparung in einem Seitenteil der Schwalbenschwanznut 21 des Drehmeißel-Halters 20 das Spannelement 50 aufnimmt. Der Spannkeil 51 ist dann ein Teil der Schwalbenschwanznut 21.

Es bleibt noch zu erwähnen, daß die Verspannung zwischen dem Schwalbenschwanzsteg 10 und der Schwalbenschwanznut 21 des Drehmeißel-Halters 20 auch durch ein auf Zug beanspruchtes Spannelement 60 gemäß Fig. 4 erfolgen kann. Der Spannkeil 61 ist mit seinem Spannteil 64 dabei je nach der Anordnung der Aussparung in dem Schwalbenschwanzsteg 10 bzw. im Drehmeißel-Halter 20 selbst ein Teil des Schwalbenschwanzsteges 10 bzw. der Schwalbenschwanznut 21. An dem Spannkeil 61 ist der Verstellbolzen 62 angeformt, der in einem Gewindeteil 63 endet. Auf das aus der Aussparung ragende Ende des Gewindeteiles 63 wird eine Feststellmutter aufgeschraubt, mittels derer der Spannkeil 61 gegen die Schwalbenschwanznut 21 bzw. den Schwalbenschwanzsteg 10 gezogen und verspannt werden kann.

Bei den Spannelementen 50 und 60 mit einem verhältnismäßig großen Verstellweg des Spannkeiles 51 bzw. 61 ergibt sich der Vorteil, daß auf dem Schwalbenschwanzsteg 10 mehrere Größen von Drehmeißel-Halter 20 mit verschieden großen Schwalbenschwanznuten 21 verriegelt werden können, wie in Fig. 2 angedeutet ist. Dies bringt eine universelle Einsatzmöglichkeit für die mit Schwalbenschwanzstegen 10 ausgebildeten, mit der Maschine verbindbaren Trägern, besonders dann, wenn der Schwalbenschwanzsteg 10 selbst den Träger 11 bildet.

## Ansprüche

1. Schnellwechsel-Stahlhalter, insbesondere für Langdrehautomaten oder ähnlichen Maschinen, bestehend aus einem mit mindestens einem Schwalbenschwanzsteg (10) versehenen, mit der Spannfläche der Maschine verbindbaren Träger (11) und einem den Drehmeißel aufnehmenden, mittels einer Schwalbenschwanznut (21) am Schwalbenschwanzsteg (10) des Trägers (11) verstellbaren und mittels eines Arretiergliedes daran verriegelbaren, U-förmigen Drehmeißel-Halters (20), wobei der Schwalbenschwanzsteg (10) des Trägers (11) mittels eines in dem Träger (11) bzw. dem Drehmeißel-Halter (20) verstellbaren Spannelementes (40, 50, 60) gegen die Schwalbenschwanznut (21) des Drehmeißel-Halters (20) verspannbar ist, dadurch gekennzeichnet, daß das Spannelement (40) mit seiner Längsachse serikrecht zur Längsachse des Schwalbenschwanzsteges (10) und der Schwalbenschwanznut (21), sowie parallel zur Spannfläche des Trägers gerichtet ist, daß an dem Schwalbenschwanzsteg (10) des Trägers (11) einseitig ein Teil als Spannausnehmung (33) ausgespart ist und daß das in dem Drehmeißel-Halter (20) verstellbare, als Arretierschraube ausgebildete Spannelement (40) direkt gegen die Wand der Spannausnehmung (33) des Schwalbenschwanzsteges (10) verstell- und verspannbar ist.

2. Schnellwechsel-Stahlhalter, insbesondere für langdrehautomaten oder ähnlichen Maschinen, bestehend aus einem mit mindestens einem Schwalbenschwanzsteg (10) versehenen, mit der Spannfläche der Maschine verbindbaren Träger (11) und einem den Drehmeißel aufnehmenden, mittels einer Schwalbenschwanznut (21) am Schwalbenschwanzsteg (10) des Trägers (11) verstellbaren und mittels eines Arretiergliedes daran verriegelbaren, an sich bekannten U-förmigen Drehmeißel-Halters (20), wobei der Schwalbenschwanzsteg (10) des Trägers (11) mittels eines in dem Träger (11) bzw. dem Drehmeißel-Halter (20) verstellbaren Spannelementes (40, 50, 60) gegen die Schwalbenschwanznut (21) des Drehmeißel-Halters (20) verspannbar ist, dadurch gekennzeichnet, daß das Spannelement (50, 60) mit seiner Längsachse senkrecht zur Längsachse des Schwalbenschwanzsteges (10) und der Schwalbenschwanznut (21), sowie parallel zur Spannfläche des Trägers (11) gerichtet ist, daß an dem Schwalbenschwanzsteg (10) des Trägers (11) eine Aufnahme für einen Spannkeil (51 bzw. 61) ausgespart ist, wobei der Spannkeil (51 bzw. 61) einen Teil (52 bzw. 64) der Seitenfläche des Schwalbenschwanzsteges (10) bildet und daß der mit dem Spannelement (50, 60) verbundene, in dem Schwalbenschwanzsteg (10) verstellbare Spannkeil (51, 61) gegen die Wand der Schwalbenschwanznut (21) des Drehmeißel-Halters (20) verstell- und verspannbar ist.

3. Schnellwechsel-Stahlhalter nach Anspruch 1, dadurch gekennzeichnet, daß der Schwalbenschwanzsteg (10) selbst den Träger (11) bildet (Fig. 1).

4. Schnellwechsel-Stahlhalter nach Anspruch 1, dadurch gekennzeichnet, daß die Spannausnehmung (33) des Schwalbenschwanzsteges (10) eine senkrecht zur Arretierungsschraubenlängsachse stehende Abschlußwand aufweist.

5. Schnellwechsel-Stahlhalter nach Anspruch 2, dadurch gekennzeichnet, daß ein zylindrischer Spannkeil (51) in einer im Durchmesser abgesetzten Bohrung als Aussparung (34, 35) mittels einer Stellschraube (54) verstellbar ist, die mittels eines Gewindeteiles (57) in eine Gewindebohrung (53) des Spannkeils (51) einschraubbar ist und sich mittels eines Bundes (56) am Absatz der Bohrung abstützt (Fig. 3).

6. Schnellwechsel-Stahlhalter nach Anspruch 2, dadurch gekennzeichnet, daß der Spannkeil (61) als Schlitten ausgebildet ist, der selbst in eine Stellschraube (63) oder dgl. ausläuft und mittels einer Stellmutter axial verstellbar ist (Fig. 4).

**Claims**

1. Quick-change tool holder, in particular for automatic longturning lathes or similar machines, consisting of a carrier (11) which is capable of being brought into connection with the gripping surface of the machine, and is provided with a least one dovetailed web (10), and of a U-shaped lathe tool holder (20) which takes up the lathe turnin tool and is capable of being adjusted with the aid of a dovetailed groove (21) on said dovetailed web (10) of said carrier (11), and of being locked thereto by means of a locking element, with said dovetailed web (10) of said carrier (11) being capable of being stayed in relation to said dovetailed groove (21) of said lathe tool holder (20) by means of a chucking workholding appliance (40, 50, 60) adjustable in said carrier (11) or said lathe tool holder (20) respectively, characterized in that said chucking workholding appliance (40) is aligned with its longitudinal axis vertically in relation to the longitudinal axes of said dovetailed web (10) and said dovetailed groove (21), as well as parallel in relation to said gripping surface of said carrier (11), that on one side of said dovetailed web (10) of said carrier (11) one part is recessed for serving as the threaded chucking bore (33), and, that said chucking workholding appliance (40) as adjustable in said lathe tool holder (20) and designed as a lock screw, is capable of being adjusted and stayed directly against the wall of said threaded chucking bore (33) in said dovetailed web (10).

2. A quick-change tool holder, in particular for automatic long-turning lathes or similar machines, consisting of a carrier (11) which is capable of being brought into connection with the gripping surface of the machine, and is provided with at least one dovetailed web (10), and of a U-shaped lathe tool holder (20) of the type known per se which takes up the lathe turning tool and is capable of being adjusted with the aid of a dovetailed groove (21) on said dovetailed web (10) of said carrier (11), and of being locked thereto by means of a locking element, with said dovetailed web (10) of said carrier (11) being capable of being stayed in relation to said dovetailed groove (21) of said lathe tool holder (20) by means of a chucking workholding appliance (40, 50, 60) adjustable in said carrier (11) or said lathe tool holder (20) respectively, characterized in that said chucking workholding appliance (50, 60) is aligned with its longitudinal axis vertically in relation to the longitudinal axes of said dovetailed web (10) and said dovetailed groove (21), as well as parallel in relation to said gripping surface of said carrier (11), that on said dovetailed web (10) of said carrier (11) a receptacle for a chucking wedge (51 or 61) is recessed, with said chucking wedge (51 or 61) forming a part (52 or 64) of the lateral surface of said dovetailed web (10) respectively, and that said chucking wedge (51, 61) which is in connection with said chucking workholding appliance (50, 60) and adjustable in said dovetailed web (10) is capable of being adjusted and stayed against the wall of said dovetailed groove (21) of said lathe tool holder (20).

3. A quick-change tool holder as claimed in claim 1, characterized in that said dovetailed web (10) itself forms said carrier (11) (Fig. 1).

4. A quick-change tool holder as claimed in claim 1, characterized in that said threaded chucking bore (33) in said dovetailed web (10) has a terminating wall standing vertically in relation to the longitudinal axis of said lock screw.

5. A quick-change tool holder as claimed in claim 2, characterized in that a cylindrical chucking wedge (51) is adjustable in a stepped-diameter borehole serving as a recess (34, 35), by means of a set screw (54) which, with a screw thread (57), is capable of being screwed into a taphole (53) as provided for in said chucking wedge (51) and, by means of a collar (56), abuts on the shoulder of said borehole (Fig. 3).

6. A quick-change tool holder as claimed in claim 2, characterized in that said chucking wedge (51) is designed as a carriage which itself ends up in a set screw (63) or the like, and is capable of being displaced in the axial direction by means of an adjusting nut (Fig. 4).

**Revendications**

1. Porte-outil à changement rapide, notamment pour tour automatique longitudinal ou machines-outils analogues, comprenant un support (11) doté d'au moins un tenon (10) en queue d'aronde et pouvant être relié à la surface de serrage de la machine, ainsi qu'un porte-outil (20) en U qui, recevant l'outil de tournage, est ajustable par une gorge (21) en queue d'aronde sur ledit tenon (10) dudit support (11) et peut y être verrouillé par un organe d'arrêt, ledit tenon (10) dudit support (11) pouvant être bloqué par rapport à la gorge (21) du porte-outil (20) au moyen d'un organe de blocage (40, 50, 60) mobile dans ledit support (11) ou dans ledit porte-outil (20), porte-outil caractérisé par le fait que l'axe longitudinal dudit organe de blocage (40) est perpendiculaire aux axes longitudinaux dudit tenon (10) et de ladite gorge (21) en queue d'aronde, et parallèle à la surface de serrage dudit support, par le fait qu'une partie dudit tenon (10) dudit support (11) est creusée d'un côté pour former un évidement de serrage (33), et par le fait que ledit organe de blocage (40), conformé en vis d'arrêt et mobile dans ledit porte-outil (20), peut être déplacé et bloqué directement contre la paroi dudit évidement de serrage (33) dudit tenon (10).

2. Porte-outil à changement rapide, notamment pour tour automatique longitudinal ou machines-outils analogues, comprenant un support (11) doté d'au moins un tenon (10) en queue d'aronde et pouvant être relié à la surface de serrage de la machine, ainsi qu'un porte-outil (20) en U, connu en soi, qui reçoit l'outil de tournage, est ajustable sur le tenon (10) dudit support (11) par une gorge (21) en queue d'aronde et peut y être verrouillé par un organe d'arrêt, ledit tenon (10) dudit support (11) pouvant être bloqué par rapport à la gorge (21) dudit porte-outil (20) au moyen d'un organe de blocage (40, 50, 60) mobile dans ledit support (11) ou dans ledit porte-outil (20), porte-outil caractérisé par le fait que l'axe longitudinal dudit organe de blocage (50, 60) est perpendiculaire aux axes longitudinaux dudit tenon (10) et de ladite gorge (21) en queue d'aronde, et est parallèle à la surface de serrage dudit support (11), par le fait que dans ledit tenon (10) dudit support (11), est ménagé le logement d'un coin de serrage (51, 61) qui constitue une partie (52, 64) de la face latérale dudit tenon (10) en queue d'aronde, et par le fait que ledit coin de serrage (51, 61), relié audit organe de blocage (50, 60) et mobile dans ledit tenon (10), peut être déplacé et bloqué contre la paroi de ladite gorge (21) en queue d'aronde dudit porte-outil (20).

3. Porte-outil selon la revendication 1, caractérisé par le fait que le tenon (10) en queue d'aronde constitue lui-même le support (11).

4. Porte-outil selon la revendication 1, caractérisé par le fait que l'évidement de serrage (33) du tenon (10) en queue d'aronde comporte un fond perpendiculaire à l'axe longitudinal de la vis d'arrêt.

5. Porte-outil selon la revendication 2, caractérisé par le fait qu'un coin cylindrique de serrage (51) est ajustable dans un évidement étagé constituant un logement (34, 35), au moyen d'une vis de réglage (54), qui peut être introduite par un filetage (57) dans un taraudage (53) dudit coin de serrage (51), et qui prend appui par un collet (56) contre le gradin dudit évidement.

6. Porte-outil selon la revendication 2, caractérisé par le fait que le coin de serrage (61) consiste en un chariot, qui se termine lui-même par une vis de réglage (63) ou un organe analogue, et qui peut être ajusté axialement au moyen d'un écrou de réglage.

Fig.1

Fig.2

Fig.3

Fig.4